# FASCICULE DE BREVET EUROPEEN

(11) **EP 3 808 484 B1**
(45) Date de publication et mention de la délivrance du brevet: **06.11.2024**
(21) Numéro de dépôt: 20191679.8
(22) Date de dépôt: 19.08.2020
(51) Int. Cl.: B23D 15/00, B23D 17/08, B23D 23/00, B26D 1/08, B26D 3/16, B26D 7/02

(54) **OUTIL DE COUPE RÉGLABLE POUR SECTIONNER DES PROFILÉS OUVERTS DE LARGEURS DIFFÉRENTES**
EINSTELLBARES SCHNEIDEWERKZEUG ZUM DURCHTRENNEN VON OFFENEN PROFILEN VERSCHIEDENER BREITEN
ADJUSTABLE CUTTING TOOL FOR SECTIONING OPEN PROFILES OF DIFFERENT WIDTHS

(30) Priorité: 26.08.2019 FR 1909400
(43) Date de publication de la demande: 21.04.2021
(73) Titulaire: EDMA, 83480 Puget-sur-Argens (FR)
(72) Inventeur: DELESTRE, Lionel, 95260 Beaumont-sur-Oise (FR)
(74) Mandataire: Corret, Hélène

(56) Documents cités:
- WO-A1-2009/056714
- WO-A1-96/33029
- DE-A1- 10 037 806
- FR-A3- 2 969 939
- US-A- 3 227 026
- US-A- 4 218 946
- US-A- 6 116 131
- US-A1- 2002 157 512
- US-B1- 7 204 179

## Description

L'invention concerne un outil de coupe réglable pour sectionner des profilés à section transversale ouverte de largeurs différentes tels que, par exemple, des rails (ou profilés) en U pour le montage de cloisons ou de faux plafonds.

Pour la découpe de tels profilés, on utilise traditionnellement une scie, un disque ou une cisaille. Cependant, quel que soit le type d'outil choisi, la découpe déforme le profilé, que ce soit en raison d'une faible rigidité du matériau ou en raison de la forme complexe du profilé et l'impossibilité qui en découle d'appliquer l'outil sur toutes les parties du profilé sous le meilleur angle. En même temps, la découpe avec certains de ces outils traditionnels produit des copeaux dangereux en raison de la longueur de leurs bords coupants.

Les outils électriques de découpe utilisent de l'énergie et nécessite donc que le chantier soit alimenté. En outre, ils font du bruit, et génèrent de la poussière métallique ainsi que, parfois, des étincelles. Par ailleurs, la coupe n'est pas nette et le profilé est déformé.

Les outils manuels de découpe, tels que des pinces grignoteuses ne font pas d'étincelles, mais l'opération de découpe est longue et fatigante.

On connaît également des systèmes de coupe manuelle de type massicot à poinçon adaptés aux profilés en U. Un tel outil est décrit dans le brevet FR2969939.

Ce type d'outil est très efficace, mais adapté à la coupe de rail de largeur unique.

Or les profilés utilisés sur les chantiers ont des dimensions, notamment la largeur, différentes.

Le document WO2009056714 qui décrit également un outil de type massicot à poinçon, mais qui est muni d'un barillet de matrices de découpe différentes, permettant la découpe de rails de largeur et de formes différentes.

Avec cet outil, les rails en U coiffent une matrice du barillet, c'est-à-dire qu'ils sont coupés âme vers le haut, les ailes étant dirigées vers le bas et insérées entre une matrice interne du barillet et la matrice externe qui, elle, ne varie ni de forme ni de largeur et qui définit, par conséquent, la largeur maximale de coupe. Ainsi, lorsque l'on doit découper un rail de faible largeur, on sélectionne la matrice interne adaptée au rail. L'espace entre la matrice interne et la matrice externe peut donc être très largement supérieur à l'épaisseur du rail à découper. Puis on positionne le rail à cheval sur ladite matrice interne et on abaisse le manche pivotant portant le poinçon de sorte que ce dernier perce le rail et découpe l'âme puis les ailes du rail par effet de doubles ciseaux entre le poinçon et une fente portée par le bâti de l'outil.

Or, si le rail de petite largeur est bien tenu à l'intérieur par la matrice intérieure, les ailes peuvent s'en écarter lors de la coupe en raison de l'espace libre jusqu'à la matrice extérieure, déformant ainsi le rail.

Par ailleurs, ces deux outils utilisent un poinçon muni d'un tranchant plat porté par un manche monté pivotant sur le bâti de l'outil. Le poinçon présente une forme courbe qui peut être complexe, avec pour objectif de limiter les efforts de cisaillement du poinçon contre le rail.

Or, le mouvement pivotant du poinçon solidaire du manche engendre des efforts de coupes inégaux lors de la découpe. En outre, lors de la découpe de rail de grande largeur, les efforts nécessaires à la coupe sont très supérieurs du fait de la forme du poinçon (qui lui ne change pas d'une largeur à l'autre), ce qui oblige à allonger le bras de levier en positionnant une rallonge sur le manche. Cet outil est donc encombrant, à la fois à l'usage (ce qui nécessite un chantier débarrasser de tout obstacle), mais également dans son emballage (ce qui engendre des coûts de fret importants) et lors de son stockage ce qui nécessite d'avoir de la place pour le stocker).

On connaît aussi le document US4218946 qui décrit un outil de découpe de gouttière comprenant un poinçon monté en translation à la manière d'une guillotine, entre deux plaques support espacées l'une de l'autre par deux entretoises, chaque plaque support formant une matrice lors de la découpe de la gouttière. Le poinçon présente un profil spécifique, globalement convexe, et dans lequel les bords de coupes sont constitués de deux segments rectilignes. Il est précisé dans ce document que le poinçon est dimensionné de telle sorte que les ailes de la gouttière sont découpées avant que l'âme ne soit percée par le poinçon. Le mécanisme d'actionnement du poinçon n'est ni décrit ni illustré, les figures indiquant simplement que le poinçon est abaissé grâce à une bielle agencée de manière coplanaire au poinçon. Ce dispositif ne permet pas de découper des gouttières de tailles différentes, sauf à changer les plaques support et le poinçon, c'est-à-dire tout l'outil. On connaît enfin les documents US6,116,131 et DE 100 37 806 A1, les outils de ces deux documents étant selon le préambule de la revendication 1.

Un premier objectif de l'invention est de proposer un outil de coupe permettant de découper des profilés de largeurs différentes sans les déformer.

L'invention vise également à proposer un outil compact, à la fois lors de l'utilisation, mais également lors de son emballage et lors de son stockage.

L'invention vise également à assurer une force de découpe identique, quelle que soit la largeur du profilé découpé. En particulier, l'invention vise à limiter les efforts de coupe tout en assurant une ergonomie de coupe optimale.

L'invention vise également à permettre une découpe de rail à pleine puissance, sans risque de se blesser.

Selon l'invention, l'outil comprend une matrice réglable en largeur. L'invention combine également un mécanisme d'abaissement de la lame en translation très efficace et une lame de forme particulière qui assure une cinématique optimisant l'effort nécessaire à la coupe, quelle que soit la largeur du profilé découpé.

Ainsi, l'invention a pour objet un outil de coupe selon la revendication 1.

Selon des modes particuliers de réalisation :
- la ou chaque matrice latérale peut être munie d'un moyen de blocage réversible en position ;
- la rainure de guidage peut être agencée le long du plan longitudinal médian ;
- le bâti peut comprendre un pied stabilisateur monté pivotant entre deux joues latérales longitudinales s'étendant parallèlement au plan longitudinal médian, chaque joue étant munie d'une plaque guide-lame transversale s'étendant perpendiculairement à la joue qui la porte et comprenant un bord de guidage de la lame en utilisation, au moins une plaque guide-lame comprenant une lumière de guidage en translation d'une matrice latérale, chaque plaque guide-lame ayant une épaisseur identique à celle de la lame ;
- chaque joue latérale peut être également munie d'une lumière de guidage en translation d'un support de lame parallèlement au plan de coupe;
- le support de lame peut être fixé de manière pivotante autour d'un premier axe de rotation à une extrémité d'au moins une bielle d'actionnement reliée par une deuxième extrémité de manière pivotante autour d'un deuxième axe de rotation à une extrémité du manche d'actionnement de la lame, l'extrémité du manche étant également montée de manière pivotante autour d'un troisième axe de rotation sur une joue latérale, les premier, deuxième et troisième axes de rotation s'étendant transversalement et perpendiculairement au plan longitudinal médian ;
- le support de lame peut comprendre une tige dont chaque extrémité est en prise avec la lumière de guidage portée par une joue latérale, et au moins un flasque fixé perpendiculairement autour de la tige et relié à une patte de fixation de la lame ;
- la patte de fixation peut être fixée à la lame à une position telle que le flasque est en butée contre la matrice de base lorsque la lame est en position de fin de coupe ;
- la ou chaque bielle d'actionnement peut s'étendre dans un plan parallèle au plan longitudinal médian et perpendiculaire au plan de coupe;
- chaque matrice latérale peut comprendre deux ailes de matrice latérale agencées de part et autre de chaque plaque guide-lame de manière à ménager une rainure dans laquelle la lame coulisse en utilisation tout en étant bloquée longitudinalement par les ailes de matrice latérale et transversalement par les plaques guide-lame ;
- la ou chaque matrice latérale mobile peut comprend, en outre, un axe de fixation des ailes de matrice engagé dans la lumière de guidage en translation de la plaque guide-lame sur laquelle la matrice latérale est montée mobile ;
- chaque plaque guide-lame peut comprendre, au-dessus des matrices latérales en position d'utilisation, deux ailes de butée de lame agencées de part et autre de chaque plaque guide-lame de manière à ménager une rainure dans laquelle la lame coulisse en utilisation tout en étant bloquée longitudinalement par les ailes de butée de lame et transversalement par les plaques guide-lame ;
- chaque plaque guide-lame peut comprendre, au-dessus des matrices latérales en position d'utilisation, une encoche débouchant dans leur bord et logeant une plaque verrou, et dans lequel l'une des deux ailes de butée de lame comprend une lumière de guidage en translation d'un pion de commande de la plaque verrou entre une position escamotée dans laquelle la plaque verrou est intégralement logée dans l'encoche et une position de verrouillage dans laquelle la plaque verrou est en saillie par rapport au bord de la plaque guide-lame ;
- la matrice de fond peut comprendre deux panneaux agencés de part et autre de chaque plaque guide-lame de manière à ménager une fente dans laquelle la lame coulisse en utilisation tout en étant bloquée longitudinalement par les panneaux de la matrice de fond et transversalement par les plaques guide-lame ;
- un premier panneau de la matrice de fond peut comprendre une échancrure de sortie de copeaux ;
- un second panneau de la matrice de fond peut comprendre la rainure de guidage en translation ;
- au moins un panneau de la matrice de fond peut comprendre un évidement sur une face agencée en regard de la lame, de telle sorte qu'une portion de la lame servant à la découpe soit agencée en regard de l'évidement lorsque la lame est en position de fin de coupe ;
- la lame peut comprendre au moins une portion de fixation au manche d'actionnement, au moins une portion de découpe de profilé, au moins une portion d'éjection de copeaux de coupe et au moins une portion de guidage en translation qui s'étend depuis la portion de fixation au manche et se prolonge au-delà de la portion d'éjection de copeaux de coupe, vers la portion de découpe de profilé ;
- la lame peut être symétrique par rapport à un axe frontal et présente au moins un tranchant plat comprenant chacun une pointe agencée dans l'axe frontal, de part et d'autre de laquelle partent deux segments courbes concaves, chacun prolongé à une hauteur de poinçonnement déterminée, en projection sur l'axe frontal, par un segment rectiligne de cisaillement formant un angle déterminé avec l'axe frontal, chaque segment rectiligne étant prolongé à une hauteur de fin de coupe déterminée, en projection sur l'axe frontal, par un segment en arc de cercle lui-même prolongé par un premier segment rectiligne, parallèle à l'axe frontal, et porté par un doigt éjecteur;
- le doigt éjecteur peut comprendre un deuxième segment rectiligne agencé en regard et parallèlement au bord de guidage de la plaque guide-lame, et relié au premier segment rectiligne par un segment terminal de doigt éjecteur ;
- l'angle formé par un segment rectiligne de cisaillement avec l'axe frontal peut être compris entre 10° et 35° ;
- lorsque la lame comprend deux tranchants plats, les angles formés par un segment rectiligne de cisaillement avec l'axe frontal peuvent être différents et être compris, respectivement, entre 10° et 20°, et entre 20° et 35°, de préférence respectivement, entre 10° et 15°, et entre 20° et 25°.
- la lame peut être fixée au bâti à une hauteur telle que, lorsque le manche est abaissé et que la pointe entre en contact avec le profilé, le manche forme avec le plan de coupe un angle compris entre 30° et 40°, de préférence entre 32 et 35° ;
- la hauteur de poinçonnement déterminée, en projection sur l'axe frontal, peut être telle que lorsque les segments courbes concaves sont totalement passés au travers du profilé, mais que les segments rectilignes de cisaillement n'ont pas encore entamé le profilé, le manche forme avec le plan de coupe un angle compris entre 40° et 50°, de préférence entre 41° et 45°, avantageusement entre 43° et 44° ;
- la hauteur de fin de coupe déterminée, en projection sur l'axe frontal, peut être telle que les segments en arc de cercle sont agencés entre les ailes de matrice latérale, quel que soit l'écartement réciproque des matrices latérales ;
- chaque segment courbe concave partant du poinçon peut présenter une longueur de poinçonnement déterminée en projection transversale, perpendiculaire l'axe frontal, telle que le rapport de la longueur de poinçonnement sur la hauteur de poinçonnement est supérieur à 1, de préférence compris entre 1,4 et 1,5, avantageusement environ 1,45 ;
- la lame peut être symétrique par rapport à l'axe frontal et comprendre deux portions de découpe agencées de part et d'autre d'un axe transversal médian perpendiculaire à l'axe frontal, les portions de découpe définissant respectivement un premier tranchant plat et un deuxième tranchant plat comprenant chacun une pointe agencée dans l'axe frontal, de part et d'autre de laquelle partent deux segments courbes concaves, chacun prolongé à une hauteur de poinçonnement déterminée, en projection sur l'axe frontal, par un segment rectiligne de cisaillement formant un angle déterminé avec l'axe frontal, chaque segment rectiligne étant prolongé à une hauteur de fin de coupe déterminée, en projection sur l'axe frontal, par un segment en arc de cercle lui-même prolongé par un premier segment rectiligne, parallèle à l'axe frontal, et porté par un doigt éjecteur, l'angle et la hauteur de fin de coupe du premier tranchant étant inférieurs respectivement à l'angle et à la hauteur de fin de coupe du deuxième tranchant.

D'autres caractéristiques de l'invention seront énoncées dans la description détaillée ci-après, faite en référence aux dessins annexés, qui représentent, respectivement :
Figure 1, une vue schématique en perspective, vue de trois quarts avant d'un outil de coupe réglable selon l'invention en position d'ouverture, c'est-à-dire avant une découpe ;
Figure 2, une vue schématique en perspective, vue de trois quarts avant, du bâti de l'outil de coupe de la figure 1 comprenant une partie de fixation d'une lame ;
Figure 3, une vue schématique en perspective, vue de trois-quarts arrière d'un outil de coupe réglable selon l'invention dont un pied de stabilisation est replié ;
Figure 4, une vue schématique en perspective, vue de trois quarts arrière d'un outil de coupe réglable selon l'invention en position repliée et démontée pour emballage ;
Figure 5, une vue schématique en perspective, vue de trois quarts avant, d'un outil de coupe selon l'invention réglé pour la coupe d'un rail de largeur intermédiaire ;
Figure 6, une vue schématique en perspective, vue de trois quarts avant, d'un outil de coupe selon l'invention réglé pour la coupe d'un rail large ;
Figure 7, une vue schématique en perspective, vue de trois quarts avant, d'un outil de coupe selon l'invention réglé pour la coupe d'un rail étroit ;
Figure 8, une vue schématique en perspective, vue de face, d'un premier mode de réalisation d'une lame de coupe particulièrement adaptée à l'outil de coupe selon l'invention, et qui permet un effort de coupe constant, quelle que soit la largeur du rail à découper;
Figure 9, une vue schématique vue de profile, d'un outil de coupe selon l'invention après le placement d'un rail en vue de sa découpe ;
Figure 10, une vue schématique vue de profile, d'un outil de coupe selon l'invention en position de poinçonnement du rail ;
Figure 11, une vue schématique vue de profile, d'un outil de coupe selon l'invention en cours de découpe du rail ;
Figure 12, une vue schématique vue de profile, d'un outil de coupe selon l'invention en fin de découpe du rail ;
Figure 13, une vue schématique en perspective, vue de trois quarts avant, d'un outil de coupe selon l'invention après le placement d'un rail en vue de sa découpe ;
Figure 14, une vue schématique en perspective, vue de trois quarts avant, d'un outil de coupe selon l'invention en position de poinçonnement du rail ;
Figure 15, une vue schématique en perspective, vue de trois quarts avant, d'un outil de coupe selon l'invention en cours de découpe du rail ;
Figure 16, une vue schématique en perspective, vue de trois quarts avant, d'un outil de coupe selon l'invention en fin de découpe du rail ;
Figure 17, une vue schématique vue de face, d'un outil de coupe selon l'invention après le placement d'un rail en vue de sa découpe ;
Figure 18, une vue schématique vue de face, d'un outil de coupe selon l'invention en position de poinçonnement du rail ;
Figure 19, une vue schématique vue de face, d'un outil de coupe selon l'invention en cours de découpe du rail, et dont une matrice de base amovible a été retirée ;
Figure 20, une vue schématique vue de face, d'un outil de coupe selon l'invention en fin de découpe du rail, et dont une matrice de base amovible a été retirée ;
Figure 21, une vue schématique en perspective, vue de trois-quarts avant et de dessous, d'un outil de coupe selon l'invention dont une matrice de base amovible a été retirée et illustrant l'espace intérieur de découpe des rails ;
Figure 22, une vue schématique en perspective, vue de trois quarts arrière, d'un outil de coupe selon l'invention en fin de découpe du rail et illustrant la butée de fin de course ;
Figure 23, une vue schématique en perspective, vue de face, d'un deuxième mode de réalisation d'une lame de coupe particulièrement adaptée à l'outil de coupe selon l'invention, et qui permet une coupe précise dans deux gammes de largeur de rail à découper ; et
Figure 24, une vue schématique en perspective, vue de trois quarts avant d'un outil de coupe réglable selon l'invention comprenant un verrou de position fermée.

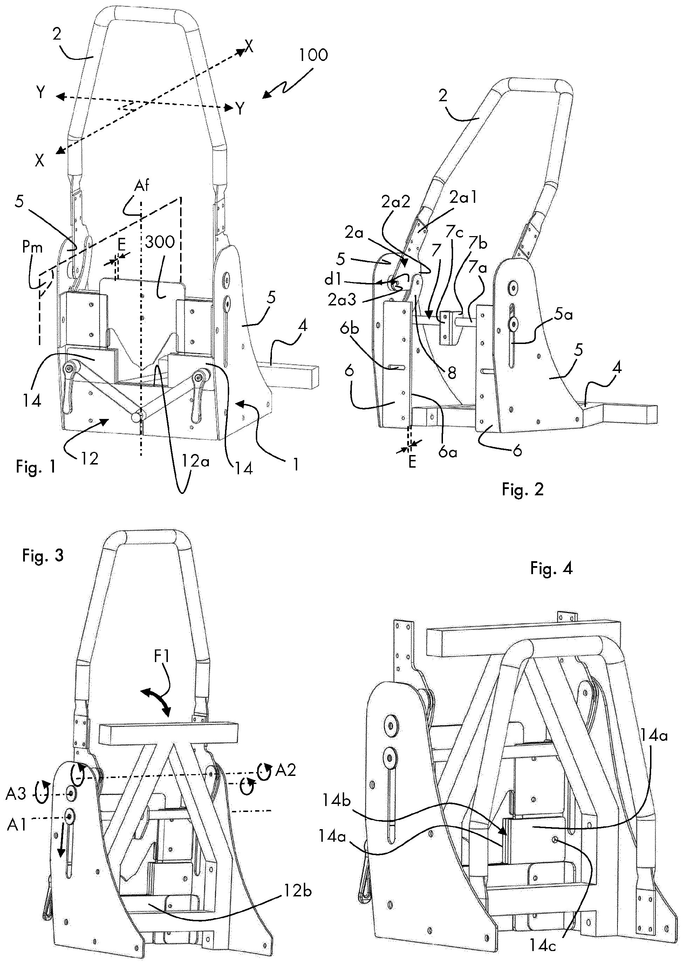

La figure 1 illustre un outil de coupe 100 selon l'invention vu de trois quarts avant en perspective. L'outil 100 présent une direction longitudinale XX et une direction transversale YY, perpendiculaire à la direction longitudinale XX. L'outil de coupe 100 présente également un plan longitudinal médian Pm.

L'outil de coupe comprend un bâti 1 sur lequel est monté pivotant, un manche d'actionnement 2 d'une lame plane 300 montée mobile en translation sur le bâti 1. Le plan de la lame définit un plan de coupe qui est transversal et perpendiculaire au plan longitudinal médian Pm.

Le bâti 1 comprend une matrice 10 destinée à recevoir le profilé R à sectionner. La matrice 10 délimite une échancrure 10a destinée à recevoir le profilé ouvert, l'échancrure 10a étant pourvue d'une fente 11 destinée à recevoir la lame 300 au cours de la découpe.

Conformément à l'invention, la matrice 10 comprend une matrice de base 12, agencée dans un plan parallèle au plan de coupe, et présentant un bord 12a destiné à supporter l'âme P1 du profilé en cours d'utilisation.

La matrice 10 comprend également au moins une matrice latérale 14 montée mobile en translation, dans une direction transversale de coulissement YY, direction qui est perpendiculaire au plan longitudinal médian. Ainsi, les matrices latérales 14 pouvant s'écarter ou se rapprocher l'une de l'autre, l'échancrure qu'elles délimitent présente une largeur variable, ce qui permet de découper des profilés de largeurs différentes.

Ainsi, contrairement au document WO2009056714, le profilé ne coiffe par la matrice de base, mais repose sur elle, les ailes du profilé étant dirigées vers le haut et contre les matrices latérales.

Dans un mode de réalisation non illustré, seule une des matrices latérales, peut être montée mobile en translation, alors que l'autre matrice latérale et fixe.

Dans tous les cas, la ou chaque matrice latérale est munie d'un moyen de blocage réversible en position qui assure que lorsque le réglage en largeur de l'échancrure est fait, l'utilisateur peut bloquer les matrices latérales dans l'écartement réciproque choisi pour découper son ou ses profilés.

Dans le mode de réalisation préféré et illustré, les deux matrices latérales 14 sont montées mobiles en translation, dans une direction transversale YY. De préférence, elles sont couplées l'une à l'autre par un système de couplage réciproque 20 qui assure un écartement et un rapprochement mutuel des matrices latérales, et ce de manière centrée par rapport à l'outil, c'est-à-dire de manière centrée par rapport au plan longitudinal médian Pm.

La figure 2 illustre l'outil de coupe selon l'invention, partiellement démonté pour montrer la structure du bâti 1.

Ainsi, le bâti 1 comprend un pied stabilisateur 4 monté pivotant entre deux joues latérales longitudinales 5, c'est-à-dire qu'elles sont agencées latéralement de part et d'autre du plan longitudinal médian Pm et qu'elles s'étendent longitudinalement, c'est-à-dire parallèlement au plan longitudinal médian Pm. Chaque joue 5 est munie d'une plaque guide-lame transversale 6 s'étendant perpendiculairement à la joue 5 qui la porte et comprenant un bord 6a de guidage de la lame, en utilisation. Au moins une, de préférence les deux plaques guide-lame 6 comprennent une lumière 6b de guidage en translation d'une matrice latérale 14. Chaque plaque guide-lame 6 a une épaisseur E identique à l'épaisseur E de la lame (voir figures 1 et 2).

Chaque joue latérale 5 comprend également une lumière 5a de guidage en translation d'un support de lame 7, parallèlement au plan de coupe.

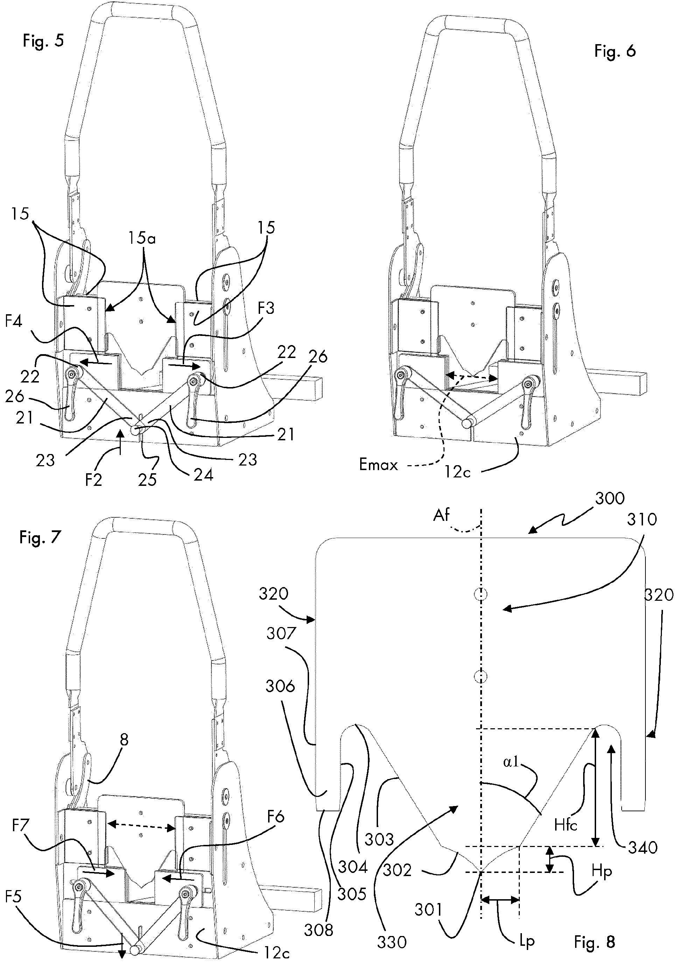

Le support de lame 7 fait partie d'un mécanisme d'actionnement de la lame, c'est-à-dire d'abaissement et de relèvement de la lame, pour découper un profilé. Ce mécanisme est particulièrement adapté à la découpe de profilés métalliques de différentes largeurs, car il permet une découpe puissante et très stable qui permet à l'utilisateur de mettre tout son poids dans la découpe sans crainte que la machine ne bascule, malgré son faible encombrement. Ce mécanisme est particulièrement efficace en combinaison avec une lame telle qu'illustrée en figure 8.

L'outil selon l'invention présente donc un encombrement beaucoup plus compact que les outils de l'art antérieur. Ainsi, comme le montrent les figures 3 et 4, il est possible de rabattre le pied stabilisateur pivotant 4 vers la lame dans le sens de la flèche F1 et de démonter le manche 2 sans avoir à démonter tout le mécanisme d'actionnement de la lame ni la lame 300. La figure 4 illustre cette configuration qui est préférentiellement celle choisie pour emballer l'outil et l'expédier, mais qui peut également être celle d'un stockage de longue durée de l'outil. Pour un stockage plus classique, le pied sera seulement rabattu comme dans la figure 3, sans que le manche ne soit démonté. Il reste que cette configuration présente une emprise au sol très inférieur à celle des outils de l'art antérieur.

Dans le mécanisme d'actionnement de la lame selon l'invention, le support de lame 7 est fixé de manière pivotante autour d'un premier axe de rotation A1, à une extrémité 8a d'au moins une, de préférence deux bielles d'actionnement 8.

Chaque bielle d'actionnement 8 comprend une deuxième extrémité 8b reliée de manière pivotante, autour d'un deuxième axe de rotation A2, à une extrémité 2a du manche d'actionnement 2 de la lame 300. Cette extrémité du manche 2a est également montée de manière pivotante autour d'un troisième axe de rotation A3, sur une joue latérale 5.

Selon l'invention, les premier A1, deuxième A2 et troisième axes de rotation A3 précités s'étendent transversalement et perpendiculairement au plan longitudinal médian. En d'autres termes, ils sont parallèles au plan de coupe.

Dans le mode de réalisation illustrée, le manche d'actionnement 2 présent une forme générale en U, dont chaque extrémité 2a est montée pivotante sur une des joues latérales 5 du bâti 1. De préférence, chaque extrémité 2a du manche 2 est démontable du reste du manche. Avantageusement, ces extrémités démontables 2a sont constituées par des plaques de forme sensiblement triangulaire, dont un sommet 2a1 porte des moyens de fixation au manche, un sommet 2a2 porte le deuxième axe de rotation A2 et un sommet porte le troisième axe de rotation A3. La distance d1 entre les deuxième et troisième axes de rotation, ainsi que la forme des bielles d'actionnement détermine l'amplitude du mouvement de la lame, c'est-à-dire la distance entre la position relevée et la position de fin de coupe.

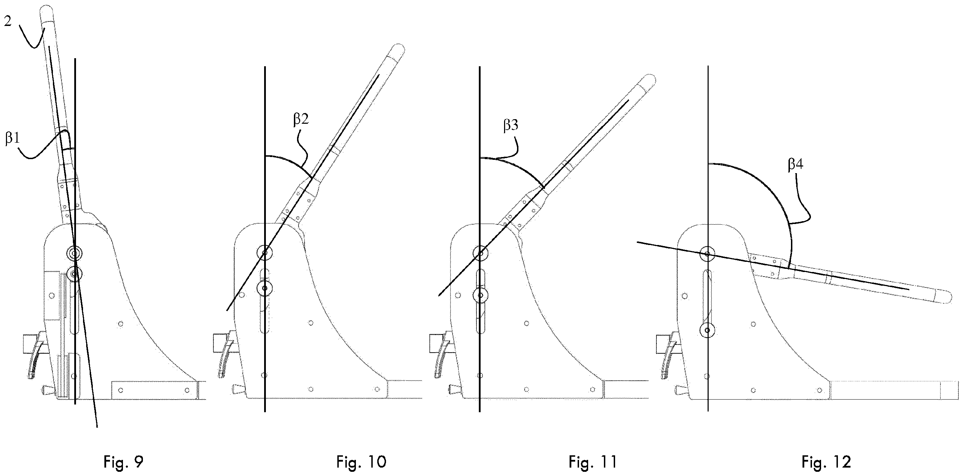

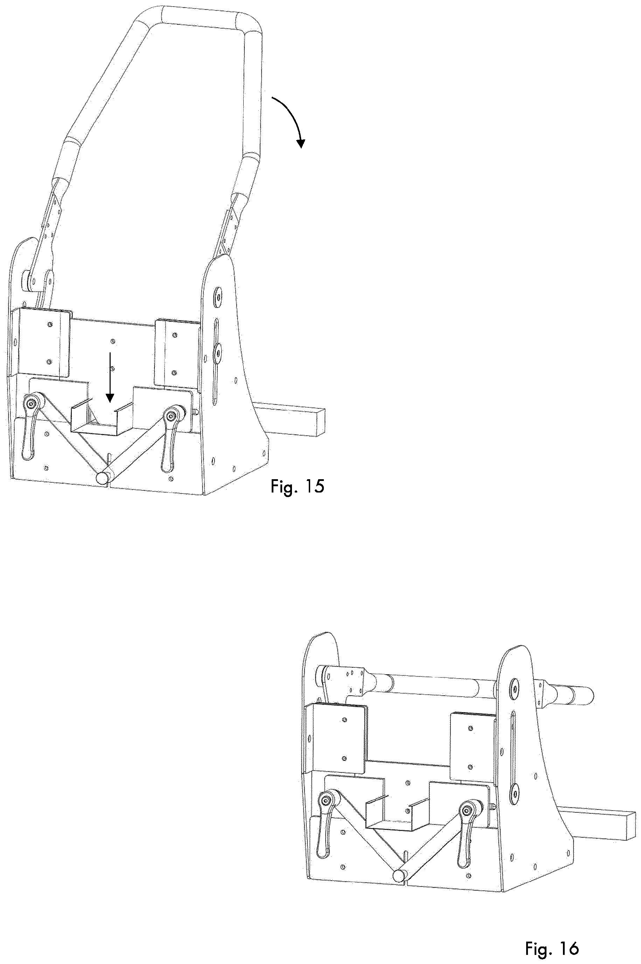

Ainsi, lorsque le manche est abaissé, les bielles d'actionnement 8 transmettent le mouvement au support de lame qui est guidé en translation, parallèlement au plan de coupe (voir les figures 9 à 20). L'outil transforme donc un mouvement de rotation du manche en un mouvement de translation du support de lame est donc de la lame.

Ainsi, chaque bielle d'actionnement s'étend donc dans un plan parallèle au plan longitudinal médian Pm et perpendiculaire au plan de coupe. Le manche s'étend donc dans un plan sécant au plan de la lame et donc au plan de coupe. Le mouvement d'abaissement du manche se fait ainsi dans un plan différent du mouvement d'abaissement de la lame qui est le plan de coupe.

Cet agencement permet à l'utilisateur d'utiliser ses deux mains alignées parallèlement à l'axe passant par ses deux épaules pour abaisser le manche tout en étant face à la lame, ce qui assure une parfaite stabilité de l'outil lors de la découpe.

En outre, la force transmise à la lame est beaucoup plus importante que dans les outils à poinçon pivotant de type massicot, ce qui permet de réduire la longueur du manche.

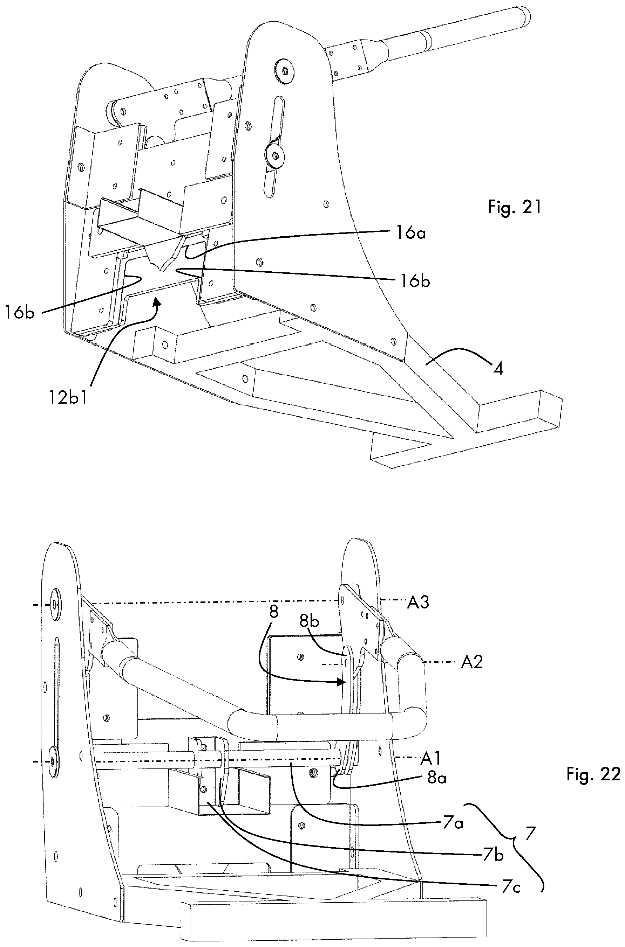

De manière avantageuse, le support de lame 7 comprend une tige 7a dont chaque extrémité est en prise avec la lumière de guidage 5a portée par une joue latérale 5 du bâti. Sur cette tige 7a, au moins un flasque 7b est fixé perpendiculairement autour de la tige et relié à une patte 7c de fixation de la lame. Dans le mode de réalisation illustré (voir la figure 22), ce sont deux flasques 7b qui sont reliés à une patte de fixation 7a de la lame. Cette structure en U garantit le maintien de la lame dans un plan parfaitement perpendiculaire au plan longitudinal médian de l'outil.

De préférence, la ou chaque patte de fixation 7c est fixée à la lame à une position telle que le ou les flasques 7b sont en butée contre la matrice de base lorsque la lame est en position de fin de coupe.

Ainsi, le support de lame assure également une fonction de butée de fin de course, qui évite à l'utilisateur de poursuivre le mouvement de rotation du manche et, éventuellement, de se blesser les mains.

Cette butée de fin de course peut également ou alternativement être assurée par les lumières de guidage en translation du support de lame, portées par chaque joue.

Grâce au châssis selon l'invention, illustré en figure 2, il est possible de fixer les matrices latérales 14 de manière coulissante, perpendiculairement au plan longitudinal médian et parallèlement au plan de coupe.

De préférence, chaque matrice latérale 14 comprend deux ailes de matrices latérales 14a (voir figure 4), agencées de part et d'autre de chaque plaque guide-lame 6 de manière à ménager une rainure 14b dans laquelle la lame coulisse en utilisation, tout en étant bloquée longitudinalement par les ailes 14a de matrice latérale et transversalement par le bord 6a des plaques guide-lame 6.

Chaque aile 14a de matrice latérale comprend un orifice 14c de passage d'un axe de fixation 14d des ailes 14a entre elles. L'axe de fixation 14d est engagé dans la lumière de guidage 6b en translation de la plaque guide-lame sur laquelle les ailes de matrice latérale 14a sont fixées.

On obtient ainsi une matrice latérale 14 montée mobile et guidée transversalement (horizontalement par rapport à la position normale d'utilisation) par rapport à la matrice de base 12 sur laquelle repose le profilé à découper.

La dimension transversale (c'est-à-dire dans la direction transversale YY) des ailes 14a de matrice latérale et l'emplacement de l'orifice 14c sont dimensionnés de telle sorte que lorsque les matrices latérales sont écartées au maximum l'une de l'autre (c'est-à-dire lorsqu'elles sont en appui contre les joues latérales 5), une rainure 14b de coulissement de la lame est toujours ménagée entre les ailes 14a de matrice latérale.

Ainsi, grâce à l'invention, on peut découper des profilés de largeurs différentes en écartant ou rapprochant les matrices latérales, tout en assurant, quel que soit l'écartement des matrices latérales, un guidage en translation verticale (par rapport à la position normale d'utilisation) de la lame lors de l'actionnement de la lame et de la découpe du profilé.

Étant donné que les profilés peuvent présenter des hauteurs variables, il peut être utile d'avoir une lame de hauteur relativement importante. Dans ce cas, la structure de l'outil de coupe selon l'invention permet d'assurer un guidage supplémentaire très efficace de la lame, y compris lorsqu'elle est en position relevée.

À cette fin, on prévoit que chaque plaque guide-lame 6 comprend, au-dessus des matrices latérales 14, deux ailes 15 de butée de lame, agencée de part et d'autre de chaque plaque guide-lame 6 de manière à ménager une rainure 15a dans laquelle la lame coulisse, en utilisation, tout en étant bloquée longitudinalement par les ailes 15 de butée de lame et transversalement par les plaques guide-lame 6, en particulier par le bord 6a de guidage de la lame.

De cette manière, même lorsque la lame est relevée et qu'elle n'est pas en prise dans les rainures 14b des matrices latérales, on s'assure d'un parfait guidage de la lame et on s'assure, surtout, que la lame s'insérera dans la rainure 14b des matrices latérales 14 de manière précise et s'en coincement.

Selon l'invention, la matrice de base 12 est également constituée par deux panneaux 12b et 12c agencés de part et d'autre de chaque plaque guide-lame. Ainsi, chaque panneau porte un bord 12a destiné à supporter le profilé, et ils délimitent la fente 11 dans laquelle la lame s'insère en utilisation, tout en étant bloquée longitudinalement par les panneaux de la matrice de base et transversalement par les plaques guide-lame 6.

Les plaques guide-lame 6 étant choisies d'épaisseur identique à la lame, le mouvement de la lame génère un double effet de ciseaux contre chaque élément de la matrice, ce qui assure, lorsque le profilé est agencé dans la matrice, une découpe précise du profilé.

Ainsi, le double effet de ciseau se produit entre la lame et les ailes 14a de matrice latérale, entre la lame et les panneaux 12b-12c de la matrice de base et éventuellement entre la lame et les ailes 15 de butée de lame.

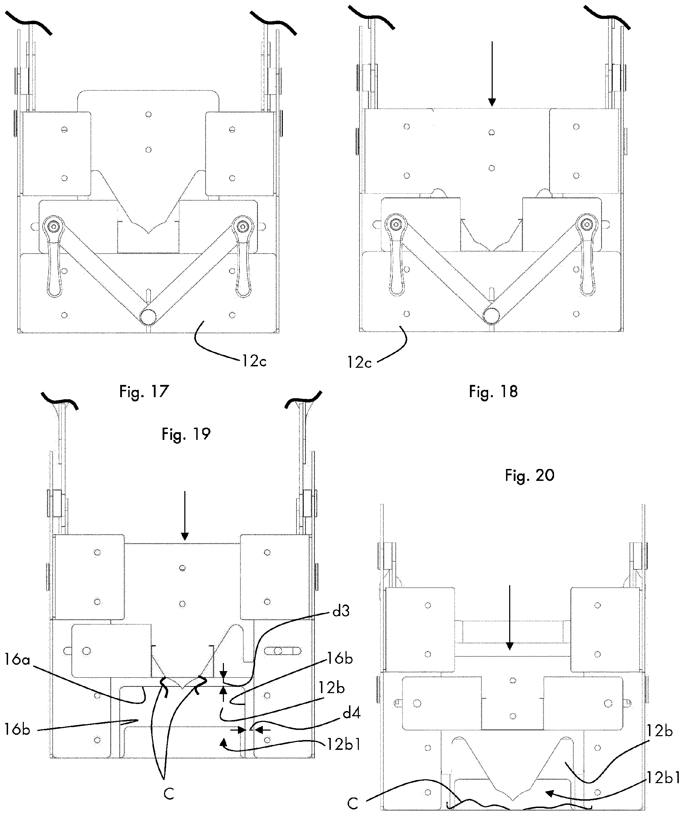

Selon un mode de réalisation avantageux de l'invention, un premier panneau 12b de la matrice de base comprend une échancrure 12b1 de sortie de copeaux C. Cette échancrure 12b1, particulièrement visible sur les figures 19 à 21, est avantageusement située sur le panneau 12b agencé vers l'espace intérieur de l'outil situé entre les joues latérales 5. Elle permet une évacuation des copeaux C issus de la coupe des profilés.

Dans un mode de réalisation non illustré, le panneau 12b porte un tiroir collecteur de copeaux C, coulissant entre une position de collecte où il s'étend sous la fente 11 et une position d'évacuation où il s'étend dans l'espace intérieur de l'outil.

Avantageusement, au moins un, de préférence les deux panneaux 12b, 12c de la matrice de base 12 comprennent un évidement 16 sur leur face qui est agencée en regard de la lame. Cet évidement 16 est réalisé dans l'épaisseur du ou de chaque panneau 12b, 12c de sorte que la lame est espacée du ou de chaque panneau d'une distance d2. L'évidement 16 peut être réalisé soit par usinage soit par soyage (double pliage) d'une plaque métallique.

Cette structure est notamment visible sur la figure 19 dans laquelle le panneau 12c et une aile de matrice latérale ont été retirés.

Selon l'invention, l'évidement 16 débouche uniquement dans le bord opposé au bord 12a de chaque panneau sur lequel les profilés sont destinés à reposer au cours de leur découpe.

Autrement dit, l'évidement 16 débouche dans le bord inférieur du ou de chaque panneau 12b, 12c, en position d'utilisation 12d.

Ainsi, il comprend un épaulement supérieur 16a agencé à une distance d3 du bord 12a du ou de chaque panneau 12b, 12c sur lequel repose le profilé en utilisation, et des épaulements latéraux 16b agencés à une distance des bords latéraux des panneaux 12b, 12c telle que les épaulements latéraux 16b sont agencés à une distance d4 du bord 6a de guidage des plaques guide-lame 6 en utilisation.

De cette manière, un ou chaque panneau comprend une surépaisseur en forme de U renversé en position d'utilisation, les ailes de la surépaisseur étant agencées contre les plaques guide-lame 6, et l'âme de la surépaisseur étant agencée le long du bord supérieur 12a de manière à délimiter la fente 11 dans laquelle la lame s'enfonce pour découper le profilé.

En d'autres termes, l'évidement 16 est agencé de telle sorte qu'une portion de la lame servant à la découpe soit agencée en regard de l'évidement 16 lorsque la lame est en position de fin de coupe.

Grâce à cette structure, on obtient non seulement un double effet de ciseaux permettant un découpage précis des profilés contre le bord 12a des panneaux, mais également une bonne évacuation des copeaux C qui ne se coincent pas entre les panneaux.

Dans une variante particulièrement pratique d'un outil selon l'invention, les deux matrices latérales 14 sont mobiles en translation, et pour faciliter le réglage de leur écartement, elles sont couplées l'une à l'autre par un système de couplage réciproque 20 qui assure un écartement et un rapprochement mutuel des matrices latérales, et ce de manière centrée par rapport à l'outil, c'est-à-dire de manière centrée par rapport au plan longitudinal médian Pm.

Dans le mode de réalisation illustré, chaque matrice mobile 14 est couplée de manière rotative à une extrémité 22 d'une bielle d'accouplement 21.

Les deux bielles d'accouplement 21 sont fixées l'une à l'autre par leur seconde extrémité 23 de manière pivotante par un pion de guidage 24.

Ce dernier est en prise avec une rainure de guidage en translation 25 portée par la matrice de base 12, et en particulier par le panneau frontal 12c.

La rainure de guidage en translation 25 s'étend parallèlement au plan de coupe et perpendiculairement à la direction transversale YY de coulissement des matrices latérales mobiles 14.

De préférence, la rainure de guidage 25 est agencée le long du plan longitudinal médian, ce qui assure un écartement et un rapprochement mutuel des matrices latérales de manière centrée par rapport à l'outil, au profilé à découper et au poinçon d'une lame décrite par la suite.

De cette manière, comme illustré en figure 5, lorsque le pion de blocage 24 est remonté dans le sens de la flèche F2 par l'utilisateur dans la rainure 25, les bielles transmettent le mouvement aux matrices mobiles 14 et le transforment en une translation transversale, assurant l'écartement des matrices dans le sens des flèches F3 et F4.

La hauteur de la rainure 25 détermine l'écartement maximal Emax des matrices mobiles 14.

Inversement, comme illustré en figure 7, lorsque le pion de blocage 24 est descendu dans le sens de la flèche F5 par l'utilisateur dans la rainure 25, les bielles transmettent le mouvement aux matrices mobiles 14 et le transforment en une translation transversale, assurant le rapprochement des matrices dans le sens des flèches F6 et F7.

Préférentiellement, l'outil est dimensionné pour permettre un écartement des matrices latérales mobiles 14 entre 45 millimètres et 110 millimètres. Cependant, ces dimensions peuvent être adaptées en fonction des profilés utilisés dans un pays particulier ou pour permettre la découpe de la plupart des profilés utilisés dans le monde.

L'outil selon l'invention permet un réglage continu et non discret, ce qui le rend très polyvalent.

De préférence, chaque extrémité 22 des bielles 21 est pourvue d'une poignée de préhension 26 qui peut être vissée en force pour constituer un moyen de blocage réversible en position des matrices latérales 14. Ainsi en vissant au maximum, chaque extrémité 22 est appuyée en force contre une matrice mobile 14, ce qui empêche tout mouvement relatif entre les bielles et les matrices mobiles, et bloque leur écartement/rapprochement réciproque.

Alternativement ou en combinaison, le pion de blocage 24 peut également être muni d'une poignée de préhension qui peut être vissée en force.

L'outil 100 décrit précédemment est utilisable avec une lame plane présentant un poinçon pour percer le profilé à découper.

Cependant, l'outil est particulièrement efficace lorsqu'il est utilisé en combinaison avec une lame telle que celle qui est illustrée en figure 8.

Cette lame permet une attaque de la découpe très efficace, ainsi qu'une force de coupe identique, quelle que soit la largeur du profilé à découper. Elle permet, en outre, d'assurer un positionnement optimal de l'utilisateur, en termes de puissance, lors de la découpe.

La lame 300 comprend une portion 310 de fixation au bâti, une portion 320 de guidage en translation le long de l'outil, une portion 330 de découpe de profilé, et une portion 340 d'éjection de copeaux de coupe.

La lame se caractérise par le fait, notamment, que la portion 320 de guidage en translation s'étend depuis la portion de fixation 310 au manche et se prolonge au-delà de la portion d'éjection de copeaux de coupe, vers la portion de découpe de profilé. Ainsi, la lame est parfaitement guidée en translation sur la majeure partie de sa hauteur, avant et pendant la découpe, et ce quelle que soit l'écartement des matrices mobiles 14.

Dans un premier mode de réalisation préféré, illustré en figure 8, la lame est symétrique par rapport à un axe frontal Af En position d'utilisation, montée sur l'outil 100, l'axe frontal est coplanaire avec le plan longitudinal médian Pm.

Cette symétrie assure une découpe identique des profilés de part et d'autre de l'axe frontal Af. La combinaison de cette symétrie et du mouvement translatif de la lame permet d'obtenir une découpe uniforme du profilé, et ce quelle que soit la largeur du profilé.

La lame 300 présente une portion 330 de découpe de profilé comprenant un tranchant plat 331 comprenant une pointe 301 agencée dans l'axe frontal Af, et de part et d'autre de laquelle partent deux segments courbes concaves 302. L'ensemble constitué par la pointe 301 et les segments courbes concaves 302 est appelé par la suite le « poinçon 301-302». Chaque segments courbes concaves 302 est prolongé par un segment rectiligne 303 de cisaillement formant un angle α1 déterminé avec l'axe frontal Af.

Les segments courbes concaves 302 s'étendent jusqu'à une hauteur de poinçonnement Hp, en projection sur l'axe frontal, et sur une largeur de poinçonnement Lp en projection perpendiculaire à l'axe frontal.

Cet agencement permet un percement très efficace des profilés, tout en diminuant l'effort de découpe généré par les segments rectilignes 303. En effet, la largeur de poinçonnement permet de réduire l'angle α1, par rapport à une lame de mêmes dimensions, mais qui serait dépourvue des segments courbes concaves et dont les segments rectilignes rejoindraient directement le poinçon 301-302.

L'angle α1 formé par un segment rectiligne de cisaillement 303 avec l'axe frontal Af est compris entre 25 degrés et 35 degrés, de préférence entre 30 et 32 degrés. Cette gamme permet une découpe qui limite l'effort nécessaire, tout en assurant une bonne compacité de la lame et donc de l'outil.

En outre, chaque segment rectiligne 303 est prolongé à une hauteur de fin de coupe déterminée Hfc, en projection sur l'axe frontal, par un segment 304 en arc de cercle lui-même prolongé par un premier segment rectiligne 305, de préférence parallèle à l'axe frontal, et porté par un doigt éjecteur 306.

Les segments 304 et 305 servent respectivement à enrouler les copeaux de coupe et à les diriger vers le bas de l'outil pour leur éjection. En particulier, lorsque les copeaux atteignent ces segments 304 et 305, ces derniers se trouvent au niveau de l'évidement 16 porté par au moins un des panneaux 12b, 12c de la matrice de base 12. Cela permet une parfaite évacuation des copeaux par le bas de l'outil, sans risque qu'ils ne se coincent entre la lame et les matrices ou entre la lame et les plaques guide-lame 6 et n'empêchent la découpe suivante.

De l'autre côté du premier segment rectiligne 305, le doigt éjecteur comprend un deuxième segment rectiligne 307, agencé en regard et parallèlement au bord 6a de guidage de la plaque guide lame 6, et relié au premier segment rectiligne par un segment terminal 308 de doigt éjecteur.

Le deuxième segment rectiligne 307 se prolonge sur toute la hauteur de la lame, ce qui assure un parfait guidage de la lame contre les bords 6a de guidage de la plaque guide lame 6, depuis la position relevée jusqu'à la position de fin de coupe.

Outre les avantages décrits précédemment, la lame 300 permet de limiter les efforts de coupes par rapport aux outils classiques.

Au repos, c'est-à-dire en position relevée (voir figures 9, 13 et 17) le manche forme un angle β1 avec le plan de coupe inférieur à 0°, de préférence compris entre -5° et -10°, environ -7° à -8°. Cela permet de s'assurer que le manche ne tombe pas par gravité dans le sens de l'abaissement de la lame, c'est-à-dire dans le sens où l'angle formé par le manche avec la verticale serait positif.

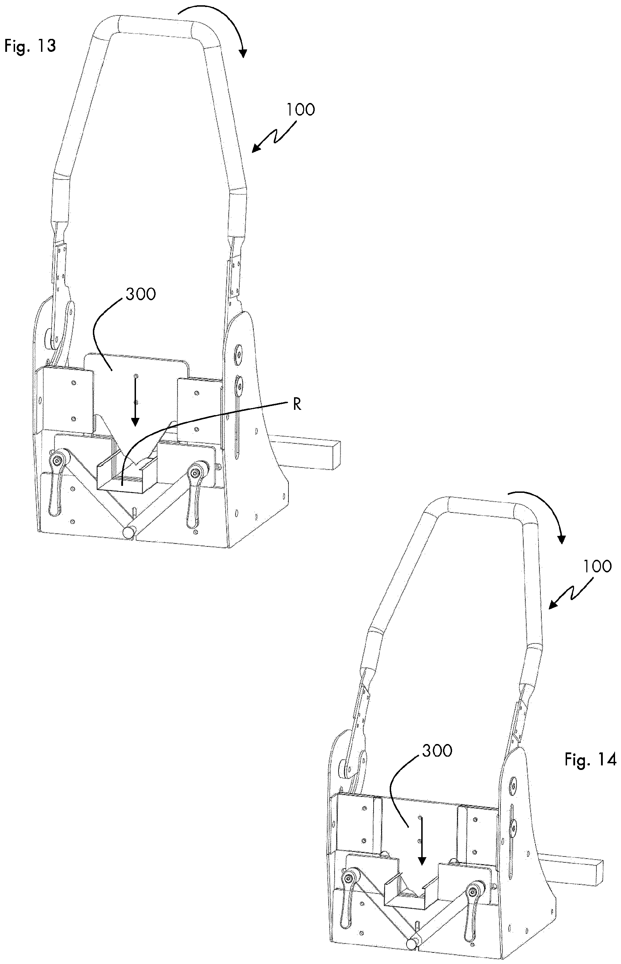

En outre, la hauteur de fixation de la lame, ainsi que l'agencement des bielles d'actionnement 8 permettent d'optimiser l'effort de coupe. Ainsi, comme illustré en figure 10, l'invention prévoit que la lame 300 est fixée au bâti à une hauteur telle que, lorsque le manche est tiré vers le bas par l'utilisateur et que la pointe 301 du poinçon 301-302 entre en contact avec le profilé (voir figures 14 et 18 correspondant à la figure 10), le manche forme avec le plan de la lame, c'est-à-dire le plan de coupe, un angle β2 compris entre 30° et 40°, de préférence entre 32 et 35°.

Dans cette position, si le rail à découper est de faible largeur, les ailes du rail ont déjà été cisaillées en partie haute. Cependant, cette découpe partielle ne nécessite pas beaucoup d'effort, car elle s'effectue à partir des extrémités libres des ailes, et dans la même direction que l'abaissement de la lame.

Pour continuer la découpe, l'utilisateur continue de tirer le manche vers le bas de manière à perforer le fond du rail avec le poinçon 301-302. La hauteur de poinçonnement déterminée Hp, en projection sur l'axe frontal, est telle que lorsque les segments courbes concaves 302 sont totalement passés au travers du profilé, mais que les segments rectilignes de cisaillement n'ont pas encore entamé le fond du profilé, le manche 2 forme avec le plan de coupe un angle β3 compris entre 40° et 50°, de préférence entre 41° et 45°, avantageusement entre 43° et 44°.

Cette phase de poinçonnement du fond du rail ne nécessite que peu de puissance en raison de la forme concave du poinçon. Il est donc aisé de passer de la position β2 à la position β3, même lorsque cela nécessite la découpe partielle des ailes du rail.

Pour continuer la découpe, l'utilisateur doit encore abaisser le manche de manière à cisailler le fond du rail et le reste des ailes du rail. Cette phase nécessite de la puissance de la part de l'utilisateur, mais la position angulaire du manche à partir de l'angle β3 est optimale pour l'utilisateur qui passe d'une action de tirage du manche vers le bas, à une action de poussage du manche vers le bas en s'appuyant dessus de toutes ses forces.

De cette manière, lorsque l'utilisateur a besoin du plus de force pour découper le profilé, c'est-à-dire au moment où les segments rectilignes 303 commencent le cisaillement du fond du profilé dans une direction perpendiculaire à la direction d'abaissement de la lame, la poignée est dans une position telle que l'utilisateur peut appliquer tout son poids.

La structure de l'outil selon l'invention permet d'obtenir une séquence de découpe qui limite la puissance nécessaire à chaque phase et qui optimise la position d'utilisation au moment où on a besoin du maximum de puissance, et ce quelle que soit la largeur du profilé à découper.

Ceci est permis par la structure de l'outil qui assure un parfait guidage de la lame tout au long du mouvement, mais également en raison de la direction d'application de la force et du mouvement de translation de la lame, qui assure une parfaite stabilité de l'outil et permet à l'utilisateur d'utiliser le poids de son corps sans risque de basculement de l'outil.

Afin de s'assurer que la force nécessaire à la découpe des profilés soit identiques entre deux profilés de largeurs différentes (toutes autres dimensions égales par ailleurs), la hauteur de fin de coupe déterminée Hfc, en projection sur l'axe frontal, est telle que les segments en arc de cercle 304 sont agencés entre les ailes de matrice latérale 14a quel que soit l'écartement réciproque des matrices latérales 14. En d'autres termes, quelle que soit la largeur du profilé, les ailes de ce dernier sont cisaillées entre les matrices latérales 14 et un bord rectiligne 303 de la lame 300. L'angle α1 formé entre ces bords rectilignes et les bords des matrices latérales ne variant pas (les bords des matrices étant parallèles à l'axe Af de la lame), la force nécessaire à la découpe ne varie pas d'un profilé à l'autre.

D'une manière générale, on recommande que chaque segment courbe concave 302 présente une longueur de poinçonnement déterminée Lp en projection transversale, perpendiculaire l'axe frontal, telle que le rapport de la longueur de poinçonnement sur la hauteur de poinçonnement est supérieur à 1, de préférence compris entre 1,4 et 1,5, avantageusement environ 1,45. Ce ratio permet une découpe optimale des profilés tout en limitant la force nécessaire à la coupe, toutes choses égales par ailleurs. Ce rapport permet de réduire l'angle α1, par rapport à une lame de mêmes dimensions, mais qui serait dépourvue des segments courbes concave et dont les segments rectilignes rejoindraient directement le poinçon 301-302.

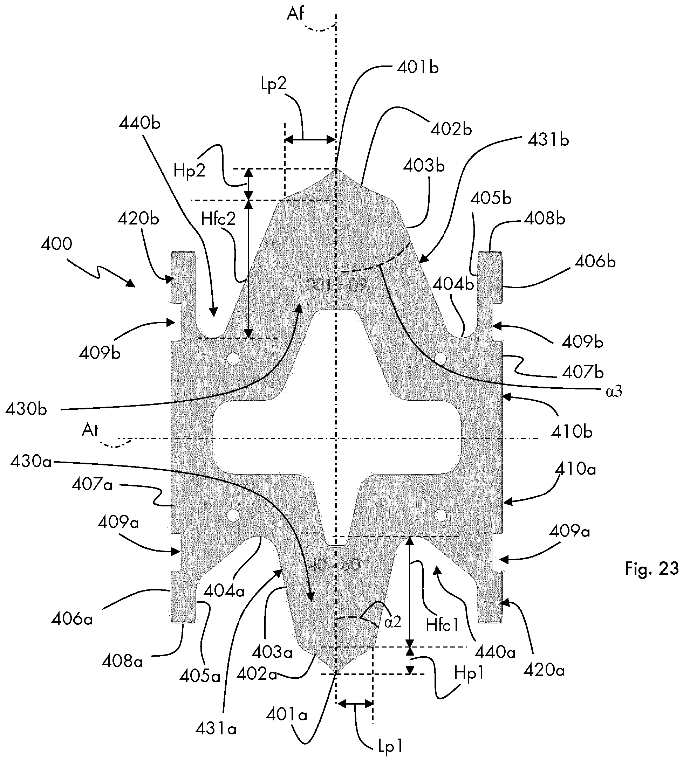

Dans un deuxième mode de réalisation illustré en figure 23, est également décrit une lame double 400, c'est-à-dire ayant deux portions de découpe de profilé 430a et 430b qui présentent chacune un tranchant plat 431a-431b.

Comme dans le premier mode de réalisation de la figure 8, chaque tranchant plat comprend une pointe 401a-401b agencée dans l'axe frontal Af, de part et d'autre de laquelle partent deux segments courbes concaves 402a-402b.

Chaque segment courbe 402a-402b est prolongé à une hauteur de poinçonnement déterminée Hp1-Hp2, en projection sur l'axe frontal, par un segment rectiligne de cisaillement 403a-403b formant un angle déterminé α2-α3 avec l'axe frontal.

Les angles α2 et α3 formés par un segment rectiligne de cisaillement 403a-403b avec l'axe frontal Af sont différents et sont compris, respectivement, entre 10° et 20°, et entre 20° et 35°, de préférence respectivement, entre 10° et 15°, et entre 20° et 25°.

Plus précisément, l'angle α2 et la hauteur de fin de coupe Hfc1 du premier tranchant 431a sont inférieurs respectivement à l'angle α3 et à la hauteur de fin de coupe Hfc2 du deuxième tranchant 431b.

En d'autres termes, la lame double présente des portions de découpe de hauteurs et de largeurs différentes, qui sont adaptées à des gammes de largeurs de rail à découper différentes : la portion 430a la plus étroite est plus adaptée à la découpe de rails de largeur comprises entre 40 et 60 millimètres, alors que la portion 430b la plus large est plus adaptée à la découpe de rails de largeur comprises entre 60 et 100 millimètres.

Comme dans le premier mode de réalisation également, chaque segment rectiligne 403a-403b est prolongé à une hauteur de fin de coupe déterminée Hfc1-Hfc2, en projection sur l'axe frontal, par un segment en arc de cercle 404a-404b lui-même prolongé par un premier segment rectiligne 405a-405b, parallèle à l'axe frontal, et porté par un doigt éjecteur 406a-406b.

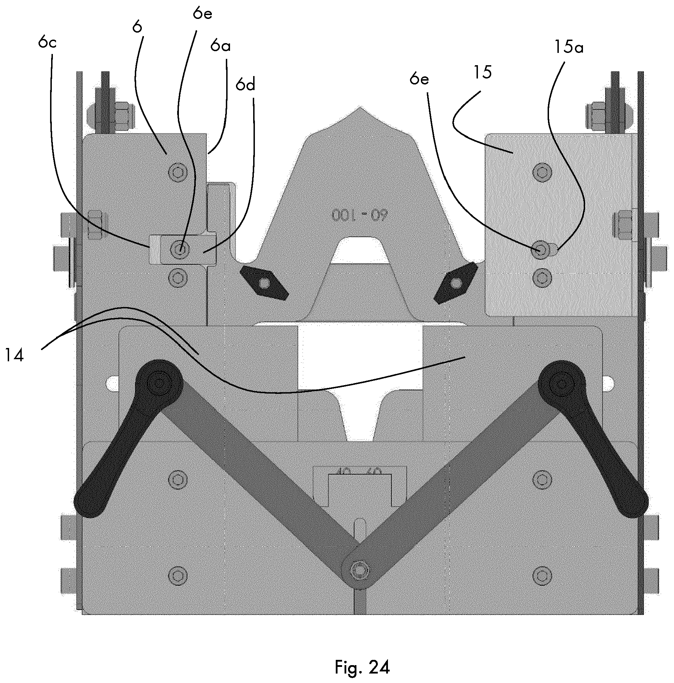

Dans le premier comme dans le deuxième mode de réalisation de lame, l'invention propose d'utiliser la lame pour bloquer l'outil de découpe en position de découpe, c'est-à-dire le manche abaissé, ce qui permet de faciliter le transport sans avoir à démonter la machine. Cette variante est illustrée aux figures 23 et 24 avec une lame du deuxième mode de réalisation de la figure 23 mais peut être prévu sans difficulté sur le premier mode de réalisation de la figure 8.

À cette fin, la lame comprend au moins un doigt éjecteur 306, 406a-406) comprenant un deuxième segment rectiligne 307, 407a-407b agencé en regard et parallèlement au bord de guidage 6a de la plaque guide-lame 6 de l'outil de découpe.

Le deuxième segment rectiligne 307, 407a-407b comprend un cran de verrouillage 409a, 409b destiné à recevoir, en utilisation, une plaque verrou 6d.

Complémentairement, chaque plaque guide-lame 6 de l'outil selon l'invention comprend, au-dessus des matrices latérales 14 en position d'utilisation, une encoche 6c débouchant dans leur bord 6a et logeant la plaque verrou 6d.

De plus, l'une des deux ailes 15 de butée de lame (ici l'aile frontale) comprend une lumière 15a de guidage en translation d'un pion de commande 6e de la plaque verrou 6d, entre une position escamotée dans laquelle la plaque verrou 6d est intégralement logée dans l'encoche 6c et une position de verrouillage dans laquelle la plaque verrou 6d est en saillie par rapport au bord 6a de la plaque guide-lame 6 et engagée dans le cran de verrouillage 409a, 409b.

Ce dernier est donc placé dans le deuxième segment rectiligne 307, 407a-407b de telle sorte qu'il se trouve en regard de l'encoche 6c (et donc permet le déplacement latéral de la plaque verrou) lorsque la poignée 2 est abaissée au plus bas, en position de fin de coupe, de sorte que l'outil occupe le moins de place en hauteur.

Pour mettre en oeuvre l'outil selon l'invention, l'utilisateur déplie l'outil pour que le pied 4 soit à plat sur le sol. Puis il bloc le pied dans cette position, de sorte que la lame soit perpendiculaire au sol.

Puis il règle et adapte la largeur de l'échancrure formée entre les matrices latérales à la largeur du profilé qu'il souhaite découper.

Par exemple, il peut écarter au maximum les matrices latérales comme illustré aux figures 5 et 6.

Il positionne alors son profilé à découper entre les matrices latérales puis rapproches ces dernières jusqu'à ce qu'elles entrent en contact avec le profilé. La présence d'un système de couplage réciproque 20 qui assure un écartement et un rapprochement mutuel et centré des matrices latérales permet de réaliser cette opération avec une seule main tout en maintenant le profilé. En outre, ce système permet de centrer automatiquement le profilé par rapport à la lame 300 et en particulier par rapport au poinçon 301-302.

Il se retrouve alors dans la position illustrée aux figures 9, 13 et 17.

Puis, l'utilisateur abaisse le manche en le tirant vers le bas jusqu'à ce que le poinçon entre en contact avec l'âme du profilé. Il se retrouve alors dans la position illustrée aux figures 10, 14 et 18. Selon la largeur du profilé, les ailes de ce dernier ont pu être cisaillées en partie haute.

Il abaisse encore le manche en le tirant vers le bas en appliquant une force qui permet au poinçon 301-302 de percer le fond du profilé. Il se retrouve dans la position illustrée aux figures 11, 15 et 19.

Au moment où il a besoin de plus de force pour découper le reste du profilé, le manche est dans une position angulaire β3 telle que l'utilisateur agit en poussant le manche vers le bas (et non plus en le tirant vers le bas) et peut très facilement appliquer cette force au manche.

Jusqu'à la fin de la découpe (figures 12, 16 et 20) il applique une force constante puisque l'angle α1 formé entre la lame et les parties de profilé qu'elle cisaille est constant, et ce quelle que soit la largeur du profilé.

En fin de découpe, le manche 2 forme avec le plan de coupe un angle β4 supérieur à 90°, de préférence supérieur à 100°, mais inférieur à une position dans laquelle les mains de l'utilisateur toucheraient une partie de l'outil ou le sol (voir figures 12, 16 et 20). Pour que le manche ne dépasse pas l'angle β4, le ou les flasques des pattes de fixation 7c sont en butée contre la matrice de base 12 lorsque la lame est en position de fin de coupe.

Cette butée de fin de course peut également ou alternativement être assurée par les lumières de guidage en translation du support de lame, portées par chaque joue.

## Revendications

1. Outil de coupe pour sectionner des profilés à section transversale ouverte en utilisation, l'outil comprenant un bâti (1) présentant une direction longitudinale (XX), une direction transversale (YY) et un plan longitudinal médian (Pm), et un manche d'actionnement (2) d'une lame (300) d'épaisseur déterminée (E) et montée mobile en translation sur le bâti dans un plan de coupe transversal perpendiculaire au plan longitudinal médian, entre une position relevée pour recevoir, entre le bâti (1) et la lame (300), un profilé (R) qui doit être découpé transversalement, et une position de fin de coupe dans laquelle le profilé est totalement découpé, le bâti (1) comprenant une matrice (10, 12, 14) destinée à recevoir le profilé à sectionner et délimitant une échancrure (10a) pourvue d'une fente (11) destinée à recevoir la lame (300) au cours d'une découpe, la matrice comprenant une matrice de base (12) agencée dans un plan parallèle au plan de coupe et destinée à supporter une âme du profilé en utilisation, la matrice comprenant en outre deux matrices latérales (14) montées mobiles en translation dans une direction transversale de coulissement (Y-Y), perpendiculaire au plan longitudinal médian, de manière à délimiter une échancrure (10a) de largeur variable, l'outil étant **caractérisé en ce que** chaque matrice est couplée à une bielle d'accouplement (21), les bielles d'accouplement (21) étant fixées l'une à l'autre de manière pivotante par un pion de guidage (24) en prise avec une rainure (25) de guidage en translation portée par la matrice de base (12, 12c) et s'étendant perpendiculairement à la direction transversale de coulissement des matrices latérales.

2. Outil de coupe selon la revendication 1 , dans lequel le bâti (1) comprend un pied stabilisateur (4) monté pivotant entre deux joues latérales longitudinales (5) s'étendant parallèlement au plan longitudinal médian, chaque joue étant munie d'une plaque guide-lame (6) transversale s'étendant perpendiculairement à la joue (5) qui la porte et comprenant un bord de guidage (6a) de la lame en utilisation, au moins une plaque guide-lame (6) comprenant une lumière (6b) de guidage en translation d'une matrice latérale (14), chaque plaque guide-lame (6) ayant une épaisseur (E) identique à celle de la lame.

3. Outil de coupe selon la revendication 2, dans lequel chaque joue latérale (5) est également munie d'une lumière (5a) de guidage en translation d'un support (7) de lame parallèlement au plan de coupe.

4. Outil de coupe selon la revendication 3, dans lequel le support (7) de lame est fixé de manière pivotante autour d'un premier axe de rotation (A1) à une extrémité (8a) d'au moins une bielle d'actionnement (8) reliée par une deuxième extrémité (8b) de manière pivotante autour d'un deuxième axe de rotation (A2) à une extrémité (2é) du manche d'actionnement (2) de la lame, l'extrémité (2a) du manche étant également montée de manière pivotante autour d'un troisième axe de rotation (A3) sur une joue latérale (5), les premier (A1), deuxième (A2) et troisième (A3) axes de rotation s'étendant transversalement et perpendiculairement au plan longitudinal médian.

5. Outil de coupe selon l'une quelconque des revendications 3 ou 4, dans lequel le support (7) de lame comprend une tige (7a) dont chaque extrémité est en prise avec la lumière (5a) de guidage portée par une joue latérale (5), et au moins un flasque (7b) fixé perpendiculairement autour de la tige et relié à une patte de fixation (7c) de la lame (300).

6. Outil de coupe selon l'une quelconque des revendications 2 à 5, dans lequel chaque matrice latérale (14) comprend deux ailes (14a) de matrice latérale agencées de part et autre de chaque plaque guide-lame (6) de manière à ménager une rainure (14b) dans laquelle la lame coulisse en utilisation tout en étant bloquée longitudinalement par les ailes (14a) de matrice latérale et transversalement par les plaques guide-lame (6).

7. Outil de coupe selon la revendication 6, dans lequel la ou chaque matrice latérale mobile (14) comprend, en outre, un axe de fixation (14d) des ailes de matrice engagé dans la lumière (6b) de guidage en translation de la plaque guide-lame sur laquelle la matrice latérale est montée mobile.

8. Outil de coupe selon l'une quelconque des revendications 2 à 7, dans lequel chaque plaque guide-lame (6) comprend, au-dessus des matrices latérales (14) en position d'utilisation, deux ailes (15) de butée de lame agencées de part et autre de chaque plaque guide-lame (6) de manière à ménager une rainure (15a) dans laquelle la lame coulisse en utilisation tout en étant bloquée longitudinalement par les ailes de butée de lame et transversalement par les plaques guide-lame.

9. Outil de coupe selon la revendication 8, dans lequel chaque plaque guide-lame (6) comprend, au-dessus des matrices latérales (14) en position d'utilisation, une encoche (6c) débouchant dans leur bord (6a) et logeant une plaque verrou (6d), et dans lequel l'une des deux ailes (15) de butée de lame comprend une lumière (15a) de guidage en translation d'un pion de commande (6e) de la plaque verrou (6d) entre une position escamotée dans laquelle la plaque verrou (6d) est intégralement logée dans l'encoche (6c) et une position de verrouillage dans laquelle la plaque verrou (6d) est en saillie par rapport au bord (6a) de la plaque guide-lame (6).

10. Outil de coupe selon l'une quelconque des revendications 2 à 9, dans lequel la matrice de fond (12) comprend deux panneaux (12b, 12c) agencés de part et autre de chaque plaque guide-lame (6) de manière à ménager une fente (11) dans laquelle la lame coulisse en utilisation tout en étant bloquée longitudinalement par les panneaux de la matrice de fond et transversalement par les plaques guide-lame.

11. Outil de coupe selon la revendication 10, dans lequel au moins un panneau (12b-12c) de la matrice de fond comprend un évidement (16) sur une face agencée en regard de la lame, de telle sorte qu'une portion de la lame servant à la découpe soit agencée en regard de l'évidement lorsque la lame est en position de fin de coupe.

12. Outil de coupe selon l'une quelconque des revendications 1 à 1 1, dans lequel la lame (300) est symétrique par rapport à un axe frontal (Af) et présente au moins un tranchant plat (331, 431a-431b) comprenant chacun une pointe (301, 401a-401b) agencée dans l'axe frontal (Af), de part et d'autre de laquelle partent deux segments courbes concaves (302, 402a-402b), chacun prolongé à une hauteur de poinçonnement déterminée (Hp, Hp 1-Hp2), en projection sur l'axe frontal, par un segment rectiligne de cisaillement (303, 403a-403b) formant un angle déterminé (α1, α2-α3) avec l'axe frontal, chaque segment rectiligne (303, 403a-403b) étant prolongé à une hauteur de fin de coupe déterminée (Hfc, Hfc1-Hfc2), en projection sur l'axe frontal, par un segment en arc de cercle (304, 404a-404b) lui-même prolongé par un premier segment rectiligne (305, 405a-405b), parallèle à l'axe frontal, et porté par un doigt éjecteur (306, 406a-406b).

13. Outil de coupe selon la revendication 12, dans lequel le doigt éjecteur (306, 406a-406b) comprend un deuxième segment rectiligne (307, 407a-407b) agencé en regard et parallèlement au bord de guidage (6a) de la plaque guide-lame (6), et relié au premier segment rectiligne (305, 405a-405b) par un segment terminal (308, 408a-408b) de doigt éjecteur.

14. Outil de coupe selon l'une quelconque des revendications 12 ou 13, dans lequel l'angle (α1) formé par un segment rectiligne de cisaillement (303) avec l'axe frontal (Af) est compris entre 10° et 35°.

15. Outil de coupe selon l'une quelconque des revendications 12 ou 13, dans lequel, lorsque la lame comprend deux tranchants plats, les angles (α2 et α3) formés par un segment rectiligne de cisaillement (403a-403b) avec l'axe frontal (Af) sont différents et sont compris, respectivement, entre 10° et 20°, et entre 20° et 35°, de préférence respectivement, entre 10° et 15°, et entre 20° et 25°.

16. Outil de coupe selon la revendication 12, dans lequel la lame (400) comprend deux portions de découpe (430a, 430b) agencées de part et d'autre d'un axe transversal (At) médian perpendiculaire à l'axe frontal (Af), les portions de découpe (430a, 430b) définissant respectivement un premier tranchant plat (431) et un deuxième tranchant plat (432) comprenant chacun une pointe (401a-401b) agencée dans l'axe frontal (Af), de part et d'autre de laquelle partent deux segments courbes concaves (402a-402b), chacun prolongé à une hauteur de poinçonnement déterminée (Hp1, Hp2), en projection sur l'axe frontal, par un segment rectiligne de cisaillement (403a-403b) formant un angle déterminé (α2-α3) avec l'axe frontal, chaque segment rectiligne (403a-403b) étant prolongé à une hauteur de fin de coupe déterminée (Hfc1-Hfc2), en projection sur l'axe frontal, par un segment en arc de cercle (404a-404b) lui-même prolongé par un premier segment rectiligne (405a-405b), parallèle à l'axe frontal, et porté par un doigt éjecteur (406a-406b), l'angle (α2) et la hauteur de fin de coupe (Hfc1) du premier tranchant étant inférieurs respectivement à l'angle (α3) et à la hauteur de fin de coupe (Hfc2) du deuxième tranchant.

## Patentansprüche

1. Schneidwerkzeug zum Durchtrennen von Profilen mit offenem Querschnitt im Gebrauch,
wobei das Werkzeug Folgendes umfasst: ein Gestell (1), das eine Längsrichtung (XX), eine Querrichtung (YY) und eine Längsmittelebene (Pm) aufweist, und einen Griff (2) zur Betätigung einer Klinge (300) mit einer bestimmten Dicke (E), die in einer zur Längsmittelebene senkrechten Querschnittsebene am Gestell zwischen einer angehobenen Stellung zur Aufnahme eines in Querrichtung zu durchtrennenden Profils (R) zwischen dem Gestell (1) und der Klinge (300), und einer Schnittendstellung, in der das Profil vollständig durchtrennt ist, translatorisch bewegbar montiert ist,
wobei das Gestell (1) eine Matrize (10, 12, 14) umfasst, die dazu bestimmt ist, das zu durchtrennende Profil aufzunehmen, und einen Ausschnitt (10a) begrenzt, der mit einem Schlitz (11) versehen ist, der dazu bestimmt ist, die Klinge (300) während des Durchtrennens aufzunehmen, wobei die Matrize eine Basismatrize (12) umfasst, die in einer zur Schnittebene parallelen Ebene angeordnet und dazu bestimmt ist, einen Steg des Profils im Gebrauch zu stützen,
wobei die Matrize ferner zwei Seitenmatrizen (14) umfasst, die in einer zur Längsmittelebene senkrecht verlaufenden transversalen Gleitrichtung (Y-Y) translatorisch bewegbar montiert sind, um einen Ausschnitt (10a) von variabler Breite zu begrenzen,
wobei das Werkzeug **dadurch gekennzeichnet ist, dass** jede Matrize mit einer Kopplungsstange (21) gekoppelt ist, wobei die Kopplungsstangen (21) durch einen Führungsstift (24) schwenkbar aneinander befestigt sind, der mit einer Translationsführungsnut (25) in Eingriff steht, die von der Basismatrize (12, 12c) getragen wird und sich senkrecht zur transversalen Gleitrichtung der Seitenmatrizen erstreckt.

2. Schneidwerkzeug nach Anspruch 1, wobei das Gestell (1) einen Stabilisationsfuß (4) umfasst, der schwenkbar zwischen zwei seitlichen Längswangen (5) montiert ist, die sich parallel zur Längsmittelebene erstrecken, wobei jede Wange mit einer transversalen Klingenführungsplatte (6) ausgestattet ist, die sich senkrecht zu der sie tragenden Wange (5) erstreckt und eine Kante (6a) zur Führung der Klinge im Gebrauch umfasst, wobei mindestens eine Klingenführungsplatte (6) eine Öffnung (6b) zur translatorischen Führung einer Seitenmatrize (14) umfasst, wobei jede Klingenführungsplatte (6) eine Dicke (E) aufweist, die mit der der Klinge identisch ist.

3. Schneidwerkzeug nach Anspruch 2, wobei jede Seitenwange (5) ebenfalls mit einer Öffnung (5a) zur translatorischen Führung eines Klingenträgers (7) parallel zur Schnittebene versehen ist.

4. Schneidwerkzeug nach Anspruch 3, wobei der Klingenträger (7) um eine erste Drehachse (A1) schwenkbar an einem Ende (8a) mindestens einer Betätigungsstange (8) befestigt ist, die mit einem zweiten Ende (8b) um eine zweite Drehachse (A2) schwenkbar an einem Ende (2é) des Betätigungsgriffs (2) der Klinge befestigt ist, wobei das Ende (2a) des Griffs ebenfalls um eine dritte Drehachse (A3) schwenkbar an einer Seitenwange (5) montiert ist, wobei sich die erste (A1), die zweite (A2) und die dritte (A3) Drehachse quer und senkrecht zur Längsmittelebene erstrecken.

5. Schneidwerkzeug nach einem der Ansprüche 3 oder 4, wobei der Klingenträger (7) Folgendes umfasst: einen Schaft (7a), dessen jeweilige Enden mit der von einer Seitenwange (5) getragenen Führungsöffnung (5a) in Eingriff stehen, und mindestens einen Flansch (7b), der senkrecht um den Schaft herum befestigt und mit einer Befestigungslasche (7c) der Klinge (300) verbunden ist.

6. Schneidwerkzeug nach einem der Ansprüche 2 bis 5, wobei jede Seitenmatrize (14) zwei Seitenmatrizenflügel (14a) umfasst, die auf beiden Seiten jeder Klingenführungsplatte (6) so angeordnet sind, dass sie eine Nut (14b) bilden, in der die Klinge im Gebrauch gleitet, während sie in Längsrichtung durch die Seitenmatrizenflügel (14a) und in Querrichtung durch die Klingenführungsplatten (6) blockiert ist.

7. Schneidwerkzeug nach Anspruch 6, wobei die bzw. jede bewegliche Seitenmatrize (14) ferner einen Bolzen (14d) zur Befestigung der Matrizenflügel umfasst, der in die Öffnung (6b) zur translatorischen Führung der Klingenführungsplatte eingreift, an der die Seitenmatrize beweglich montiert ist.

8. Schneidwerkzeug nach einem der Ansprüche 2 bis 7, wobei jede Klingenführungsplatte (6) oberhalb der Seitenmatrizen (14) in der Gebrauchsstellung zwei Klingenanschlagsflügel (15) umfasst, die auf beiden Seiten jeder Klingenführungsplatte (6) so angeordnet sind, dass sie eine Nut (15a) bilden, in der die Klinge im Gebrauch gleitet, während sie in Längsrichtung durch die Klingenanschlagsflügel und in Querrichtung durch die Klingenführungsplatten blockiert ist.

9. Schneidwerkzeug nach Anspruch 8, wobei jede Klingenführungsplatte (6) oberhalb der Seitenmatrizen (14) in der Gebrauchsstellung eine Kerbe (6c) umfasst, die in deren Kante (6a) mündet und eine Riegelplatte (6d) aufnimmt, und wobei einer der beiden Klingenanschlagsflügel (15) eine Öffnung (15a) zur translatorischen Führung eines Stifts (6e) zur Steuerung der Riegelplatte (6d) zwischen einer eingezogenen Stellung, in der die Riegelplatte (6d) vollständig in der Kerbe (6c) untergebracht ist, und einer Verriegelungsstellung, in der die Riegelplatte (6d) in Bezug auf die Kante (6a) der Klingenführungsplatte (6) vorsteht, umfasst.

10. Schneidwerkzeug nach einem der Ansprüche 2 bis 9, wobei die Basismatrize (12) zwei Platten (12b, 12c) umfasst, die auf beiden Seiten jeder Klingenführungsplatte (6) so angeordnet sind, dass sie einen Schlitz (11) bilden, in dem die Klinge im Gebrauch gleitet, während sie in Längsrichtung durch die Platten der Basismatrize und in Querrichtung durch die Klingenführungsplatten blockiert ist.

11. Schneidwerkzeug nach Anspruch 10, wobei mindestens eine Platte (12b - 12c) der Basismatrize eine Aussparung (16) auf einer der Klinge gegenüberliegenden Seite umfasst, so dass ein zum Schneiden dienender Abschnitt der Klinge gegenüber der Aussparung angeordnet ist, wenn sich die Klinge in der Schnittendstellung befindet

12. Schneidwerkzeug nach einem der Ansprüche 1 bis 11, wobei die Klinge (300) zu einer Stirnachse (Af) symmetrisch ist und mindestens eine flache Schneide (331, 431a - 431b) aufweist, die jeweils eine Spitze (301, 401a - 401b) umfasst, die in der Stirnachse (Af) angeordnet ist, von der zu beiden Seiten zwei konkave Kurvensegmente (302, 402a - 402b) ausgehen, die jeweils in einer bestimmten Durchstanzhöhe (Hp, Hp1 - Hp2) in der Projektion auf die Stirnachse durch ein geradliniges Schersegment (303, 403a - 403b), das einen bestimmten Winkel (α1, α2 - α3) mit der Stirnachse bildet, verlängert sind, wobei jedes geradlinige Segment (303, 403a - 403b) in einer bestimmten Schnittendhöhe (Hfc, Hfc1 - Hfc2) in der Projektion auf die Stirnachse durch ein kreisbogenförmiges Segment (304, 404a - 404b) verlängert wird, das seinerseits durch ein erstes geradliniges Segment (305, 405a - 405b) verlängert und von einem Auswurffinger (306, 406a - 406b) getragen wird.

13. Schneidwerkzeug nach Anspruch 12, wobei der Auswurffinger (306, 406a - 406b) ein zweites geradliniges Segment (307, 407a - 407b) umfasst, das der Führungskante (6a) der Klingenführungsplatte (6) gegenüberliegend angeordnet und mit dem ersten geradlinigen Segment (305, 405a - 405b) durch ein Endsegment (308, 408a - 408b) des Auswurffingers verbunden ist.

14. Schneidwerkzeug nach einem der Ansprüche 12 oder 13, wobei der Winkel (α1), der ein geradliniges Schersegment (303) mit der Stirnachse (Af) bildet, zwischen 10° und 35° beträgt.

15. Schneidwerkzeug nach einem der Ansprüche 12 oder 13, wobei, wenn die Klinge zwei flache Schneiden umfasst, die Winkel (α2 und α3), die ein geradliniges Schersegment (403a - 403b) mit der Stirnachse (Af) bildet, unterschiedlich sind und zwischen 10° und 20° bzw. zwischen 20° und 35°, vorzugsweise zwischen 10° und 15° bzw. zwischen 20° und 25° betragen.

16. Schneidwerkzeug nach Anspruch 12, wobei die Klinge (400) zwei Schneidabschnitte (430a, 430b) umfasst, die auf beiden Seiten einer zur Stirnachse (Af) senkrechten Quermittelachse (At) angeordnet sind, wobei die Schneidabschnitte (430a, 430b) eine erste flache Schneide (431) bzw. eine zweite flache Schneide (432) definieren, die jeweils eine in der Stirnachse (Af) angeordnete Spitze (401a - 401b) umfassen, von der zu beiden Seiten zwei konkave Kurvensegmente (402a - 402b) ausgehen, die jeweils in einer bestimmten Durchstanzhöhe (Hp1, Hp2) in der Projektion auf die Stirnachse durch ein geradliniges Schersegment (403a - 403b), das einen bestimmten Winkel (α2 - α3) mit der Stirnachse bildet, verlängert werden, wobei jedes geradlinige Segment (403a - 403b) in einer Schnittendhöhe (Hfc1 - Hfc2) in der Projektion auf die Stirnachse durch ein kreisbogenförmiges Segment (404a - 404b) verlängert wird, das seinerseits durch ein erstes geradliniges Segment (405a - 405b) verlängert wird, das parallel zur Stirnachse verläuft und von einem Auswurffinger (406a - 406b) getragen wird, wobei der Winkel (α2) und die Schnittendhöhe (Hfc1) der ersten Schneide kleiner sind als der Winkel (α3) bzw. die Schnittendhöhe (Hfc2) der zweiten Schneide.

## Claims

1. Cutting tool for sectioning profiles with a transverse section that is open in use, the tool comprising a frame (1) having a longitudinal direction (XX), a transverse direction (YY) and a median longitudinal plane (Pm), and a handle (2) for actuating a blade (300) of determined thickness (E) that is mounted so as to be able to move in translation on the frame in a transverse cutting plane perpendicular to the median longitudinal plane, between a raised position for receiving, between the frame (1) and the blade (300), a profile (R) that is to be cut transversely, and an end of cutting position in which the profile has been completely cut, the frame (1) comprising a die (10, 12, 14) intended to receive the profile to be sectioned and delimiting a cutout (10a) provided with a slot (11) intended to receive the blade (300) during cutting, the die comprising a base die (12) arranged in a plane parallel to the cutting plane and intended to support a web of the profile in use, the die also comprising two lateral dies (14) mounted so as to be able to move in translation in a transverse sliding direction (Y-Y), perpendicular to the median longitudinal plane, so as to delimit a cutout (10a) of variable width, the tool being **characterized in that** each die is coupled to a coupling link (21), the coupling links (21) being fastened to one another in a pivoting manner by a guiding peg (24) engaged with a groove (25) for guiding in translation borne by the base die (12, 12c) and extending perpendicularly to the transverse sliding direction of the lateral dies.

2. Cutting tool according to Claim 1, wherein the frame (1) comprises a stabilising foot (4) mounted so as to pivot between two longitudinal lateral walls (5) extending parallel to the median longitudinal plane, each wall being provided with a transverse blade guide plate (6) extending perpendicularly to the wall (5) that bears it and comprising an edge (6a) for guiding the blade in use, at least one blade guide plate (6) comprising an aperture (6b) for guiding a lateral die (14) in translation, each blade guide plate (6) having a thickness (E) identical to that of the blade.

3. Cutting tool according to Claim 2, wherein each lateral wall (5) is also provided with an aperture (5a) for guiding a blade support (7) in translation parallel to the cutting plane.

4. Cutting tool according to Claim 3, wherein the blade support (7) is fastened, in such a way as to pivot about a first rotation axis (A1), to an end (8a) of at least one actuation link (8) connected by a second end (8b), in such a way as to pivot about a second rotation axis (A2), to an end (26) of the handle (2) for actuating the blade, the end (2a) of the handle also being mounted, in such a way as to pivot about a third rotation axis (A3), on a lateral wall (5), the first (A1), second (A2) and third (A3) rotation axes extending transversely and perpendicularly to the median longitudinal plane.

5. Cutting tool according to either one of Claims 3 and 4, wherein the blade support (7) comprises a rod (7a) of which each end is engaged with the guiding aperture (5a) borne by a lateral wall (5), and at least one flange (7b) fastened perpendicularly around the rod and connected to a tab (7c) for fastening the blade (300).

6. Cutting tool according to any one of Claims 2 to 5, wherein each lateral die (14) comprises two lateral die flanks (14a) arranged on either side of each blade guide plate (6) so as to provide a groove (14b) in which the blade slides in use while at the same time being blocked longitudinally by the lateral die flanks (14a) and transversely by the blade guide plates (6).

7. Cutting tool according to Claim 6, wherein the or each mobile lateral die (14) also comprises a pin (14d) for fastening the die flanks that is engaged in the aperture (6b) for guiding in translation the blade guide plate on which the lateral die is mounted so as to be able to move.

8. Cutting tool according to any one of Claims 2 to 7, wherein each blade guide plate (6) comprises, above the lateral dies (14) in the use position, two blade stop flanks (15) arranged on either side of each blade guide plate (6) so as to provide a groove (15a) in which the blade slides in use while at the same time being blocked longitudinally by the blade stop flanks and transversely by the blade guide plates.

9. Cutting tool according to Claim 8, wherein each blade guide plate (6) comprises, above the lateral dies (14) in the use position, a notch (6c) opening into their edge (6a) and housing a lock plate (6d), and wherein one of the two blade stop flanks (15) comprises an aperture (15a) for guiding a control peg (6e) of the lock plate (6d) in translation between a stowed position in which the lock plate (6d) is entirely housed in the notch (6c) and a locking position in which the lock plate (6d) projects with respect to the edge (6a) of the blade guide plate (6).

10. Cutting tool according to any one of Claims 2 to 9, wherein the bottom die (12) comprises two panels (12b, 12c) arranged on either side of each blade guide plate (6) so as to provide a slot (11) in which the blade slides in use while at the same time being blocked longitudinally by the panels of the bottom die and transversely by the blade guide plates.

11. Cutting tool according to Claim 10, wherein at least one panel (12b-12c) of the bottom die comprises a recess (16) on a face arranged facing the blade, such that a portion of the blade used for the cutting is arranged facing the recess when the blade is in the end of cutting position.

12. Cutting tool according to any one of Claims 1 to 11, wherein the blade (300) is symmetrical with respect to a frontal axis (Af) and has at least one flat cutting edge (331, 431a-431b) each comprising a point (301, 401a-401b) arranged on the frontal axis (Af), from either side of which start two concave curved segments (302, 402a-402b), each extended at a determined punching height (Hp, Hp1-Hp2), in projection on the frontal axis, by a rectilinear shearing segment (303, 403a-403b) forming a determined angle (α1, α2-α3) with the frontal axis, each rectilinear segment (303, 403a-403b) being extended at a determined end of cutting height (Hfc, Hfc1-Hfc2), in projection on the frontal axis, by a circular-arc segment (304, 404a-404b) itself extended by a first rectilinear segment (305, 405a-405b), parallel to the frontal axis, and borne by an ejector finger (306, 406a-406b).

13. Cutting tool according to Claim 12, wherein the ejector finger (306, 406a-406b) comprises a second rectilinear segment (307, 407a-407b) arranged facing and parallel to the guiding edge (6a) of the blade guide plate (6), and connected to the first rectilinear segment (305, 405a-405b) by an ejector finger terminal segment (308, 408a-408b).

14. Cutting tool according to either one of Claims 12 and 13, wherein the angle (α1) formed by a rectilinear shearing segment (303) with the frontal axis (Af) is between 10° and 35°.

15. Cutting tool according to either one of Claims 12 and 13, wherein, when the blade comprises two flat cutting edges, the angles (α2 and α3) formed by a rectilinear shearing segment (403a-403b) with the frontal axis (Af) are different and are respectively between 10° and 20° and between 20° and 35°, preferably respectively between 10° and 15° and between 20° and 25°.

16. Cutting tool according to Claim 12, wherein the blade (400) comprises two cutting portions (430a, 430b) arranged on either side of a median transverse axis (At) perpendicular to the frontal axis (Af), the cutting portions (430a, 430b) respectively defining a first flat cutting edge (431) and a second flat cutting edge (432) each comprising a point (401a-401b) arranged on the frontal axis (Af), from either side of which start two concave curved segments (402a-402b), each extended at a determined punching height (Hp1, Hp2), in projection on the frontal axis, by a rectilinear shearing segment (403a-403b) forming a determined angle (α2-α3) with the frontal axis, each rectilinear segment (403a-403b) being extended at a determined end of cutting height (Hfc1-Hfc2), in projection on the frontal axis, by a circular-arc segment (404a-404b) itself extended by a first rectilinear segment (405a-405b), parallel to the frontal axis, and borne by an ejector finger (406a-406b), the angle (α2) and the end of cutting height (Hfc1) of the first cutting edge being smaller respectively than the angle (α3) and than the end of cutting height (Hfc2) of the second cutting edge.
